# EUROPEAN PATENT APPLICATION

(11) **EP 2 899 644 A1**
(43) Date of publication of application: **29.07.2015**
(21) Application number: 12877885.9
(22) Date of filing: 17.07.2012
(51) Int. Cl.: G06F 15/163

(54) **DEVICE AND METHOD FOR INTER-CORE COMMUNICATION IN MULTI-CORE PROCESSOR**

(71) Applicant: ZTE Corporation, Guangdong Province 518057 (CN)
(72) Inventor: WANG, Peng, Shenzhen Guangdong 518057 (CN); SHI, Yijun, Shenzhen Guangdong 518057 (CN)
(74) Representative: Zerbi, Guido Maria
(86) International application number: PCT/CN2012/078767
(87) International publication number: WO 2013/177854

(57) **Abstract**

An apparatus, method and message for inter-core communication in a multi-core processor are provided. The apparatus includes an outbox unit, a relay unit, an inbox unit, and an interface unit. The outbox unit buffers a message that is transmitted from a transmitting core corresponding to the outbox unit and needs to be transmitted to a receiving core, and transmits the buffered message to the relay unit. The relay unit forwards the received message to the inbox unit. The inbox unit receives and buffers the message transmitted by the relay unit to be read by the receiving core corresponding to the inbox unit. The interface unit provides the interfaces and data protocol adaption between the transmitting core and the apparatus and between the receiving core and the apparatus.

## Description

### Technical Field

The present invention relates to the technology field of the high performance processor, and in particular, to an apparatus and method for inter-core communication in a multi-core processor.

### Background of the Related Art

Along with the multi-core processor being increasingly extensively applied to each technical field, its advantages, the powerful parallel computing capability, the low power consumption and the high integration density, are accepted by the market gradually. The marked feature of the multi-core processor is that the same task can be decomposed into the thread or progress with multiple cores for parallel running, and this kind of parallelism brings the prominent promotion of the performance. However, meanwhile the multi-core processor brings the performance promotion, it also brings a series of problems, such as, the frequent inter-core communication tasks and the complicated management of the multi-core communication, etc., and this problem is becoming more and more outstanding along with more and more cores integrated on the same chip. So, the high speed and high efficiency apparatus and method for inter-core communication become one of the critical technologies of the multi-core processor chips.

In the related art, the inter-core communication method based on the shared memory is generally adopted. For example, the patent of the application number CN200510087321 "the inter-core communication method and apparatus of the multi-core processor in the embedded real-time operating system", it adopts the shared memory to realize the shared message pool and the message data pipeline required by the inter-core communication. This kind of method needs the operating system software to establish the message queue, and needs to set up the pipeline operation of the inter-core communication, therefore, the complexity is higher; more critically, in order to complete the consistency of access to the multi-core shared message memory, a large amount of synchronous operations, such as, unlocking etc., and these complicated software interaction steps will reduce the efficiency of the inter-core communication greatly; in addition, the method based on the shared memory even increases its uncertainty for the real-time communication because the inter-core message must share the same bandwidth with the data.

In order to solve the low efficiency problem of the inter-core communication method based on the shared memory, some improved methods are generated as well. For example, the patent of the application number US20080988459 "Method and System for Generating and Delivering Inter-Processor Interrupts in a Multi-Core Processor and in Certain Shared Memory Multi-Processor Systems", it operates a series of dedicated interrupted memory registers (IMR) through the software to appoint the shared storage area, and triggers automatically the generation of the inter-core interrupt when the write operation aims at the appointed shared storage area. But its message is stored in the cyclic buffer of the shared storage area, and it still needs the data structure realized through the software to perform the cyclic buffer access; and the interrupt generated by the message notification is generated by the IMR. It still needs to set up the IMR register ahead of time, and the factors, such as, the separation of the register operation and the message operation, and many software interaction steps, etc., cause directly that the delay of its inter-core communication is greater and the software programming is complicated, which is unable to meet the demands of the high-performance multi-core communication.

Besides the above mentioned main defects, such as, the communication efficiency of the existing inter-core communication technology being low and the real-time being unable to be guaranteed, etc., when the quantity of cores is increased notably, the existing inter-core communication technology will need more hardware resources and more complicated software process steps; in the heterogeneous multi-core system, the frequency, interface structure and different supporting of the data structure of the core also increase the software complexity of the existing inter-core communication method greatly, and the compatibility and the reliability of the heterogeneous core communication program are insufficient. That is, the expansibility and the flexibility of the existing inter-core communication technology are insufficient when it is adapted with the increasing core heterogeneity and quantity of cores. Therefore, the existing inter-core communication technical scheme needs to be improved.

### Summary of the Invention

The embodiment of the present invention provides an apparatus, method and message for inter-core communication in a multi-core processor, to solve the problem that the complexity of the existing inter-core communication is high and the efficiency is low and the expandability for adapting the multiple cores is bad.

The apparatus for inter-core communication in a multi-core processor of the embodiment of the present invention comprises an outbox unit, a relay unit, an inbox unit, and an interface unit, wherein:
the outbox unit is configured to: buffer a message that is transmitted from a transmitting core corresponding to the outbox unit and needs to be transmitted to a receiving core, and transmits the buffered message to the relay unit;
the relay unit is configured to: forward the received message to the inbox unit;
the inbox unit is configured to: receive and buffer the message that is transmitted by the relay unit to the receiving core corresponding to the inbox unit, to be read by the receiving core corresponding to the inbox unit; and
the interface unit is configured to: provide interfaces and data protocol adaption between the transmitting core and the apparatus and between the receiving core and the apparatus.

Alternatively, the inbox unit comprises:
an interrupt generation module, configured to: when the inbox unit receives the message transmitted to the corresponding receiving core, generate a valid message arrival interrupt request when buffer of the inbox unit is changed from empty to not empty; when the message of the buffer of the inbox unit is read by the receiving core, automatically clear the interrupt request when the buffer is changed from not empty to empty.

Alternatively, the outbox unit comprises:
a message buffer, configured to buffer a message wrote by the transmitting core;
a read-write controller, configured to control reading and writing of the message buffer module; and
a state register, configured to store a storage state of the message buffer.

Alternatively, the inbox unit further comprises:
a message buffer, configured to buffer the message transmitted by the relay unit;
a read-write controller, configured to control reading and writing of the message buffer module; and
a state register, configured to store a storage state of the message buffer.

Alternatively, the message comprises a target identification used for representing the receiving core of the message, and the inbox unit is configured to select the message transmitted to the receiving core corresponding to the inbox unit for buffering according to the target identification in the message.

Alternatively, the target identification is made up of A bits, wherein A is a positive integer and A is a quantity of the receiving cores participating in the inter-core communication, and every bit is corresponding to one receiving core, a bit corresponding to a target receiving core of the message is valid, and a bit corresponding to a non-target receiving core of the message is invalid.

Alternatively, the relay unit comprises an arbiter;
the arbiter is configured to: perform polling and arbitration for messages arriving at the relay unit at the same time, and enable multiple messages arriving at the same time to be serially output in order; or perform priority arbitration on the messages arriving at the relay unit at the same time, and enable multiple messages arriving at the same time to be serially output according to an order with priorities from high to low.

The method for inter-core communication in a multi-core processor of the embodiment of the present invention comprises:
a transmitting core writing a message required to be transmitted to a receiving core into an outbox unit corresponding to a transmitting core through an interface unit;
the outbox unit transmitting a received message to a relay unit;
the relay unit forwarding the message to the inbox unit through arbitrating;
the inbox unit buffering the message transmitted to the receiving core corresponding to the inbox unit; and
the receiving core reading the message from the inbox unit corresponding to the receiving core.

Alternatively, the above-mentioned method further comprises:
when the inbox unit receives the message transmitted to the corresponding receiving core, generating a valid message arrival interrupt request when buffer of the inbox unit is changed from empty to not empty; when the message of the buffer of the inbox unit is read by the receiving core, automatically clearing the interrupt request when the buffer is changed from not empty to empty.

Alternatively, the step of the transmitting core writing a message required to be transmitted to a receiving core into an outbox unit corresponding to the transmitting core comprises:
the transmitting core reading a state indicating register in the outbox unit, and successively writing the message into the outbox unit according to read remaining space information of buffer; or
the transmitting core writing the message into the outbox unit directly.

Alternatively, the message comprises a target identification used for representing the receiving core of the message, and the step of the inbox unit buffering the message transmitted to the receiving core corresponding to the inbox unit comprises: the inbox unit selecting the message transmitted to the receiving core corresponding to the inbox unit for buffering according to the target identification in the message.

Alternatively, the target identification is made up of A bits, wherein A is an positive integer and is the quantity of the receiving cores participating in the inter-core communication, and every bit is corresponding to one receiving core, a bit corresponding to a target receiving core of the message is valid, and a bit corresponding to a non-target receiving core of the message is invalid.

Alternatively, the step of the receiving core reading the message from the inbox unit corresponding to the receiving core comprises:
after the receiving core detects the message arrival interrupt request, reading a state register in the inbox unit to obtain the quantity of messages in the inbox unit, and then reading all messages; or
after the receiving core detects the message arrival interrupt request, reading the messages in the inbox unit directly; or
the receiving core reading the messages through an inquiry mode directly, the buffer of the inbox unit being empty during performing the reading operation, and the inbox unit returning an invalid indication message to the receiving core.

Alternatively, the step of the relay unit forwarding the message to the inbox unit through arbitrating comprises:
the relay unit performing fair polling and arbitration on the messages arriving at the same time and enabling multiple messages arriving at the same time to be serially output in order; or performing priority arbitration on the messages arriving at the relay unit at the same time and enabling multiple messages arriving at the same time to be serially output according to an order with priorities from high to low.

The message for inter-core communication in a multi-core processor of the embodiment of the present invention comprises a target identification which represents a target receiving core of the message;
wherein the target identification is made up of A bits, wherein A is an positive integer and is the quantity of the receiving cores in the multi-core processor, and every bit is corresponding to one receiving core, a bit corresponding to the target receiving core of the message is valid, and a bit corresponding to a non-target receiving core of the message is invalid.

Alternatively, the message further comprises a source identification which represents a source transmitting core of the message; wherein
the source identification is made up of B bits, wherein B is an positive integer and is the quantity of the transmitting cores participating in the inter-core communication, every bit is corresponding to one transmitting core, a bit corresponding to the source transmitting core of the message is valid, and a bit corresponding to a non-source transmitting core of the message is invalid; or
the source identification is obtained from performing coding in other ways on a core identification of the transmitting core in the multi-core processor.

Alternatively, the message further comprises message type information, task information, event information or address information.

The above-mentioned inter-core communication processing apparatus and method can make various cores receive and transmit the messages independently, which solves the problem that accessing the multiple cores at the same time is limited by the bandwidth caused by the design of the shared memory area in the traditional multi-core communication mode, and avoids the operation steps, such as, the mutual exclusion and initialization, etc., brought by the design of the shared memory area in the traditional multi-core communication mode, and improves the inter-core communication efficiency notably. The composition units of the apparatus for the inter-core communication can be expanded, reduced and selected with different design details as required, thus flexibly adapting the notably increasing of the quantity of cores, or the core heterogeneity or the core formed cluster, and the application scene with the special communication requirement. The above-mentioned message format makes the multiple application scenes, such as, the message unicast, multicast and broadcast, etc., to be supported without increasing extra software steps.

### Brief Description of Drawings

FIG. 1 is a structural diagram of an apparatus for inter-core communication according to an embodiment of the present invention;
FIG. 2 is a flow chart of a method for inter-core communication according to an embodiment of the present invention;
FIG. 3 is a diagram of a message format according to an embodiment of the present invention;
FIG. 4 is a structural diagram of an apparatus for inter-core communication according to embodiment one of the present invention;
FIG. 5 is a structural diagram of an outbox unit according to embodiment one of the present invention;
FIG. 6 is a structural diagram of an inbox unit according to embodiment one of the present invention;
FIG. 7 is a structural diagram of a relay unit according to embodiment one of the present invention;
FIG. 8 is a diagram of a message format according to embodiment one of the present invention;
FIG. 9 is a structural diagram of an apparatus for inter-core communication according to embodiment two of the present invention;
FIG. 10 is a diagram of a message format according to embodiment two of the present invention;
FIG. 11 is a structural diagram of an apparatus for inter-core communication according to embodiment three of the present invention.

### Preferred Embodiments of the Present Invention

The embodiment of the present invention is described in detail with reference to the accompanying drawings hereinafter. It should be illustrated that, in the case of not conflicting, the embodiments in the present application and features in these embodiments can be combined with each other.

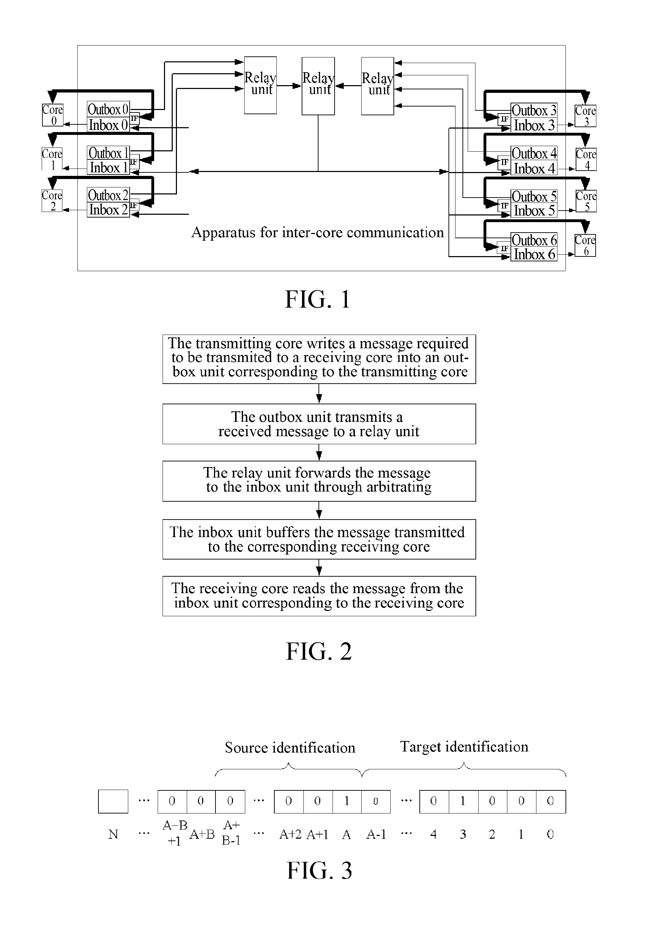

FIG. 1 shows a structural diagram of an inter-core communication system according to an embodiment of the present invention, wherein each core is connected with the apparatus for inter-core communication and communicated through the apparatus for inter-core communication. The apparatus for inter-core communication includes an outbox unit, a relay unit, an inbox unit, and an interface (IF) unit.

The outbox unit is configured to: buffer a message that is transmitted from a transmitting core corresponding to the outbox unit and needs to be transmitted to a receiving core, and transmits the buffered message to the relay unit.

The relay unit is configured to: arbitrate and forward the received message to the inbox unit; there can only be one relay unit, and also multi-stage relay units can be set according to the quantity and location of the cores in the system as shown in FIG. 1.

The inbox unit is configured to: receive and buffer the message that is transmitted by the relay unit to be read by the receiving core corresponding to the inbox unit.

The interface unit is configured to: provide interfaces and data protocol adaption between the transmitting core and the apparatus and between the receiving core and the apparatus.

Preferably, the inbox unit includes: an interrupt generation module, configured to: when the inbox unit receives the message transmitted to the corresponding receiving core, generate a valid message arrival interrupt request when buffer of the inbox unit is changed from empty to not empty; when the message of the buffer of the inbox unit is read by the receiving core, automatically clear the interrupt request when the buffer is changed from not empty to empty.

FIG. 2 shows a flow chart of a method for performing the inter-core communication by applying the above-mentioned apparatus, including the following steps.

The transmitting core writes a message required to be transmitted to a receiving core into an outbox unit corresponding to the transmitting core;
the outbox unit transmits a received message to a relay unit;
the relay unit forwards the message to the inbox unit through arbitrating;
the inbox unit buffers the message transmitted to the receiving core corresponding to the inbox unit.
the receiving core reads the message from the inbox unit corresponding to the receiving core.

Preferably, the above-mentioned method can further include:
when the inbox unit receives the message transmitted to the corresponding receiving core, generating a valid message arrival interrupt request when buffer of the inbox unit is changed from empty to not empty; when the message of the buffer of the inbox unit is read by the receiving core, automatically clearing the interrupt request when the buffer is changed from not empty to empty.

FIG. 3 shows a message format of the inter-core communication in an embodiment of the present invention, as shown in the figure.

In N bits, 0∼A-1 bit information is the target identification, which represents the receiving core of the message. A is the quantity of the receiving cores in the multi-core processor, and every bit is corresponding to one receiving core, and it represents that the message needs to be sent to the corresponding core when a certain bit is valid.

A∼A+B-1 bit information is the source identification, which represents the transmitting core of the message. B is the quantity of the transmitting cores in the multi-core processor, and it represents that the message needs to be sent to the corresponding core when a certain bit is valid; or other coding forms are adopted to perform the source identification coding on the A∼A+B-1 bit information.

The other bit is other attributes of the message, such as, the message type information, the task information, the event information or the address information.

The embodiment of the present invention is explained in detail hereinafter by taking the multi-core processing system including multiple digital signal processing (DSP) cores and multiple central processing unit (CPU) cores as the example.

### The embodiment 1:

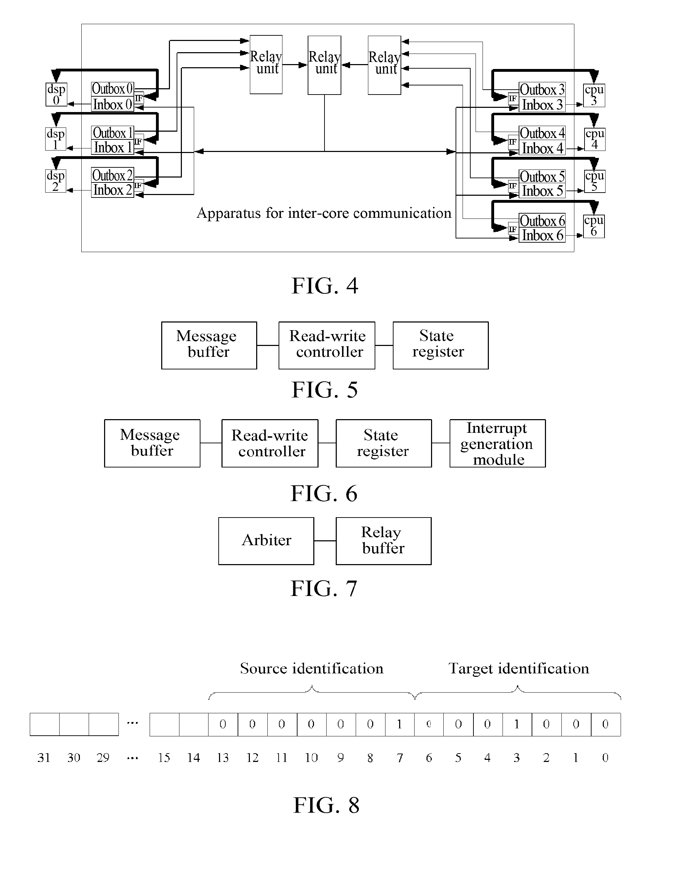

FIG. 4 is the first preferred structure of the apparatus for the inter-core communication of the embodiment of the present invention, located in the heterogeneous multi-core processing system including 3 DSP cores (DSP0-2) and 4 CPU cores (CPU3-6) and providing the inter-core communication function. The multiple DSP cores mainly complete the operation function, and the multiple CPUs mainly complete the protocol processing and the control and scheduling. The communication function in the heterogeneous multi-core system includes any DSP core transmitting the message to any DSP core or CPU core, and any CPU core transmitting the message to any CPU core or DSP core. Because of the communication flowrate determined by the application layer, each DSP core or CPU core is corresponding to one private OUTBOX and one private INBOX. The 2-stage relay (MUX_RELAY) unit forms the forwarding channel of the message. In order to save the resources, and because the interface characteristics of the DSP core and the CPU core are the same, the OUTBOXs and INBOXs of all cores share one interface unit (IF). All buffers can be realized based on the First In First Out (FIFO) structure.

As shown in FIG. 5, the OUTBOX in the present embodiment can include:
a message buffer (BUFFER), configured to buffer a message wrote by the transmitting core;
a read-write controller, configured to control reading and writing of the message buffer module; and
a state register, configured to store a storage state of the message buffer.

As shown in FIG. 6, the INBOX in the present embodiment can include:
a message buffer (BUFFER), configured to buffer the message transmitted by the relay unit;
a read-write controller, configured to control reading and writing of the message buffer module; and
a state register, configured to store a storage state of the message buffer.

The interrupt generation module is configured to:
generate the interrupt request and notify the receiving core. The generation of the interrupt is associated with the state of the buffer in the INBOX. When the buffer in the INBOX is not empty, the message arrival interrupt request pin is valid, which represents the message coming; the message arrival interrupt request pin becomes invalid automatically when the buffer of the INBOX is empty. The design mode avoids the additional steps of separated message arriving and configuring the message arriving at the indicating register in the traditional design mode, that is, the hardware structure is simplified, the software processing step is further simplified, and the time delay of the inter-core communication is reduced greatly.

As shown in FIG. 7, the relay unit in the present embodiment can include an arbiter and a relay buffer.

The arbiter is configured to perform the data gating for the multiple data channels arriving at the same time. In the present embodiment, fairly polling the arbiter is adopted, which provides the function of polling the various data channels with the messages, that is, only one data channel with the request can be gated each time, and one message therein is selected and forwarded; then the next data channel with the message is gated, and then one message is forwarded; and so on, until all messages in the data channels are forwarded completely. The mechanism can play a role of balancing the message load among the multiple cores to a certain extent, and provide more forwarding chances for the channels with more message communication, which can provide the beneficial results greatly to the situation that the quantity of the inter-core communication is uneven. The relay buffer is configured to buffer the gated message.

The interface unit of the present embodiment completes the interfaces and data protocol adaption between the heterogeneous core and the apparatus for inter-core communication, to provide the uniform message and state information interface to the apparatus for the inter-core communication. Because the interfaces of the CPU core and the DSP core are the same in the present embodiment, the same IF unit is multiplexed to complete the conversion of the data channel protocol of the CPU/DSP core and the apparatus for the inter-core communication.

Based on the above-mentioned apparatus for the inter-core communication, taking the DSP core, such as, the DSP0, sending the message to the CPU core, such as the CPU4, in FIG. 4 as the example, the method for the inter-core communication in the present embodiment includes the following steps.

In step 1, the DSP0 writes the message to be transmitted to the CPU4 into the OUTBOX0 of the DSP0 through the interface IF.

In the step, the DSP0 can read the state indicating register in the OUTBOX0 first, and perform the successive message reading and writing according to the obtained remaining space information of BUFFER; the DSP0 can also write the message into the OUTBOX0 directly when the inter-core communication is lightweight and the buffer design of the OUTBOX can enable the unusual transmission to be ignored; now if the CPU0 writes the message into the already full BUFFER, it will cause message to be lost, and will store the state information in the state register of the OUTBOX.

In step 2, the message is forwarded to the entrance of all INBOXs through the relay unit.

In step 3, the INBOX4 determines that the message is transmitted to the CPU4 according to the message format, buffers the message, and generates the message arrival interrupt request and transmits to the CPU4; other INBOXs determine that it is not the message transmitted to their own according to the message format, so the previous state is kept.

In the step, when the INBOX4 is full, the message required to be buffered to the INBOX4 can be buffered temporarily and automatically to the previous-stage relay unit of the INBOX4 and even the buffer of the OUTBOX4, and it is not abandoned; after the receiving core reads the message to enable the INBOX4 to have remaining spaces, it is transferred to the INBOX4; the method utilizes the buffer structure distributed in every place and the controlled congest effect to maximum extent, in order to obtain the beneficial effect to achieve the usage efficiency of maximum buffer space by adopting the distributed buffer unit.

The processing procedures of the above-mentioned step 2 and 3 do not need any transmitting core or receiving core to perform the software operation which is totally completed by the apparatus for the inter-core communication itself as stated hereinabove, and this kind of characteristic brings the reducing of the software complexity greatly.

In step 4, the CPU4 reads the message in the INBOX4, which can have three kinds of reading modes.

In 4A), after the CPU4 detects the message arrival interrupt request, it can read the state register in the INBOX4 through the interface first and then read the message in the INBOX4. The register information includes the quantity of the messages received in the INBOX at present, so the CPU4 can receive one interrupt request, and read all received messages. In this way, the situation of frequently entering the ISR (the interrupt service routines) can be avoided, and the software implementation efficiency is improved greatly; this kind of method is especially suitable for the situation that the time of the inter-core communication is more and the quantity of the messages is numerous.

In 4B), after the CPU4 detects the message arrival interrupt request, then it reads the message in its own INBOX4 directly through the interface. When the buffer in the INBOX1 is empty, the message arrival interrupt request is automatically invalid, thus avoiding that the receiving core needs to perform the empty operation during each interrupt; this kind of method is especially suitable for the situation that the time of the inter-core communication is less.

In 4C), the receiving core can ignore the interrupt request and read the message through the inquiry mode directly; because the INBOX provides the extra protection mechanism: once the INBOX is empty, and a certain core performs the reading operation to read the INBOX, then it will return the specified invalid indication message with all "F" to guarantee the correctness of the software operation; this kind of situation is especially suitable for the situation that the quantity of communication is great with the similar cycle characteristic.

The method procedure of the present embodiment is explained by taking the DSP0 transmitting the message to the CPU4 as the example hereinabove. Certainly, the transmitting core can transmit multiple messages to multiple receiving cores, and one message from the transmitting core can be transmitted to multiple receiving cores as well. In order to support the message unicast, multicast and broadcast situations effectively, the embodiment of the present invention also defines a kind of message format, which enable the inbox corresponding to the receiving core to judge whether the received message is transmitted to its corresponding receiving core.

As shown in FIG. 8, one 32-bit message is taken as the example.

The 0-6th bit information is the target identification, used for identifying the receiving core of the message, and these 7 bits are corresponding to 7 cores in the multi-core system respectively; these 7 cores can all be taken as the receiving cores; if a certain bit is high, then it represents that the core corresponding to the bit is the receiving core of the message. As shown in the figure, the 0∼6th bits are corresponding to DSP0∼CPU6 respectively, which are 0001000, then it represents that the message is transmitted to the CPU3. If the message needs to be transmitted to the CPU3, 4 and 5, then the 0∼6th bits are 0001110. Thus it can support the message unicast, multicast and broadcast situations effectively at the same time under the situation without increasing the hardware expenses.

The 7∼13th bit information is the source identification, used for identifying the transmitting core of the message, and these 7 bits are also corresponding to 7 cores in the multi-core system respectively; these 7 cores can all be taken as the transmitting cores; if a certain bit is high, then it represents that the core corresponding to the bit is the receiving core of the message, and the 7∼13th bits are also corresponding to the DSP0∼CPU6 respectively, and the 7∼13th bits are 1000000, to identify the transmitting core of the message as DSP0.

The residual bit can be other attributes of the message, such as, the task ID, the event ID, the address information, etc., which can be set flexibly.

### Embodiment 2:

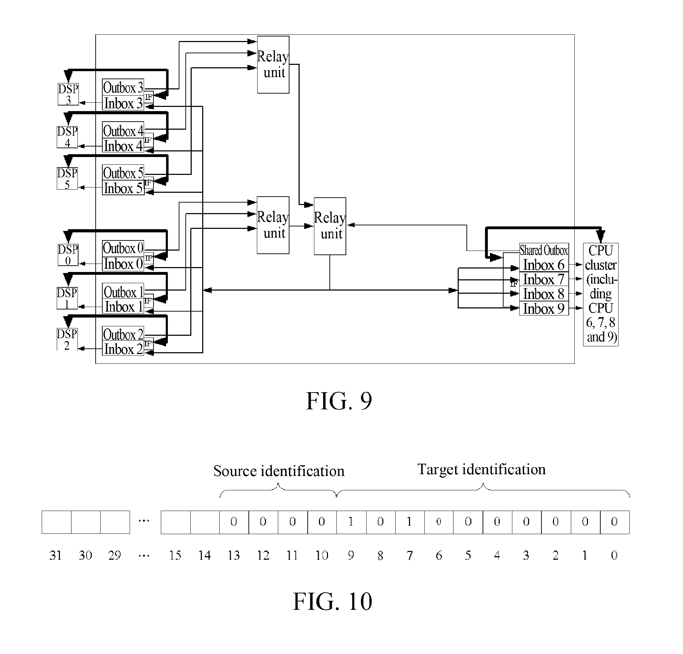

FIG. 9 is the second preferred structure of the apparatus for the inter-core communication described in the present invention. The prominent difference from the embodiment 1 lies in that the system is added with 3 DSP cores, and the 4 CPU cores appear in the form of cluster, and it is a current commonly used multi-core form to form the cluster with multiple cores. The apparatus and method for the inter-core communication in the present embodiment should complete the inter-core communication function between 6 DSP cores and one CPU cluster (including 4 CPU cores). Because of the communication flowrate determined by the application layer, each DSP core has one private OUTBOX and one private INBOX, but the OUTBOX of one CPU cluster is shared. The 2-stage MUX_RELAY forms the forwarding channel of the message. In order to save the resources, the OUTBOX and the INBOX of each core share one interface unit. All buffers can be realized on the basis of the FIFO structure. The message buffering can be realized by adopting the FIFO with a certain depth according to the difference of the application scenes, and the hardware structures of the MUX_RELAY units at different positions are the same as well. Therefore, the expanding application is performed by paying a very little price under the situation that the core quantity is increased greatly and the multiple cores are applied in the cluster currently.

The 4 units in the apparatus for the inter-core communication described in the present embodiment are basically identical with the embodiment 1, and its notable differences are as follows.
1, the arbiter of the relay unit preferentially forwards the message of which the priority is higher in the messages coming at the same time according to the priority rank in the message. This plays a very beneficial effect in the inter-core communication application scene with distinguishing the quality of service (Qos) message.
2, because the 4 CPUs exist in the form of cluster (CLUSTER), their OUTBOXs are shared, that is, the messages of the multiple cores in the same cluster are written into the same OUTBOX.

The steps of the method for the inter-core communication based on the apparatus for the inter-core communication of the present embodiment are roughly same with embodiment 1. That is, when the DSP core X needs to communicate with the CPU core Y, the DSP core X writes the message into its dedicated OUTBOX through the BUS and the interface; and it writes into the corresponding INBOX finally through the selection and forwarding of the multi-stage MUX_RELAY. The INBOX generates the interrupt request to the CPU core Y, and the CPU core Y reads the message in the INBOX through the BUS and the IF interface, thus completing once inter-core communication.

As shown in FIG. 10, it is the message form diagram of the present embodiment. Similar to embodiment 1, the 0∼9th bits are the target identifications, and these 10 bits are respectively corresponding to the 10 cores in the multi-core system; if a certain bit is high, then it represents that the core corresponding to the bit is the receiving core of the message; as shown in the figure, the receiving cores of the message are CPU 7 and 9. Because the quantity of cores of the present embodiment is more, therefore, the source identification is different from embodiment 1. The 10∼13th bit information is the source identification, and the bit information is the binary code of the uniform identification of the core transmitting the message in the system. For example, 0000 in the figure represents DSP0.

### Embodiment 3:

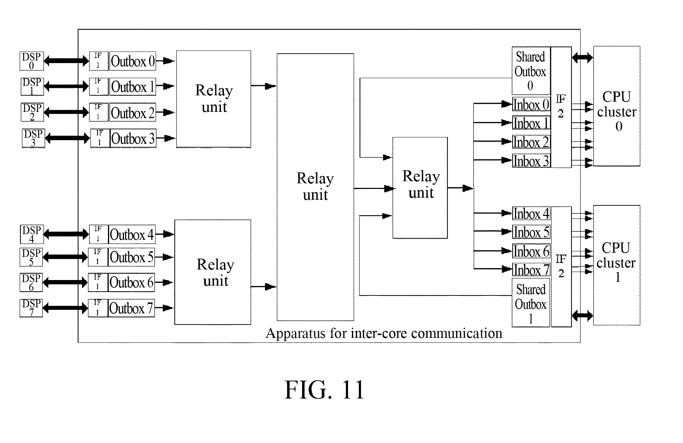

FIG. 11 is the third preferred structure of the apparatus for the inter-core communication described in the present invention. Because of the application demand, the apparatus for the inter-core communication described in the present embodiment performs the structural expansion and reduction compared to 1 and 2, and the apparatus for the inter-core communication is made up of 10 OUTBOXs, 8 INBOXs and 4 relay units. The relay units have obvious layering characteristics. The apparatus for the inter-core communication supports the 2 CPU clusters transmitting the messages to each other and the DSP transmitting the message to the CPU.

The difference between the embodiment 1 and 2 is as follows.
1, the INBOX can support to generate 2 kinds of interrupt requests, the INBOX message arrival interrupt request and the unusual interrupt request. When the INBOX is full and there is still the message required to be buffered to the INBOX, the filled overflow is generated, and now the overflow unusual interrupt request will be generated at this moment; the overflow message counter starts counting at the same time, and it is cleared after the overflow message counting information is read, and the receiving core can obtain the register information. The method provides the requirement for the software debugging flexibility.
2, the relay unit supports 2 arbitrating and message forwarding modes.

The relay unit not only supports the fair polling and arbitrating, it provides the function to perform the polling among various data channels with the messages, that is, only one data channel with the request can be gated each time, and one message therein is selected and forwarded; then the next data channel with the message is gated, and then one message is forwarded; and so on, until all messages in the data channels are forwarded completely. It also supports the arbitration with the priority, and the arbiter can preferentially forward the message of which the priority is higher in the messages arriving at the same time according to the priority rank defined by the software in the message, thus enabling the specific message to obtain better quality of service (Qos).
3, because the data interface between the DSP core and the CPU core has the heterogeneity, the interface units IF1 and IF2 with the similar structure but supporting different core data interface protocols are adopted.

The inter-core communication method and the message defmition mode of the present embodiment are the same as embodiment 2: that is, when the DSP core X needs to communicate with the CPU CLUSTER1 core Y, the DSP core X writes the message into its dedicated OUTBOX through the BUS and the interface; and it writes into the INBOX corresponding to the CPU CLUSTER1 core Y finally through the selection and forwarding of the 3-stage MUX_RELAY. The INBOX generates the interrupt request to the CPU core Y, and the CPU core Y reads the message in the INBOX through the BUS and the IF interface, thus completing one inter-core communication.

Because the quantity of cores in the present embodiment is more, the message adopts the form same as embodiment 2, which will no longer go into details here.

It can be seen from the above-mentioned embodiment, the steps of the whole inter-core communication are simple, and the transmitting core and the receiving core only need to use the general reading and writing interface functions when receiving and transmitting the message, and compared with the traditional inter-core communication mode, it does not need the special software data structure to support, and the software programming efficiency is improved greatly, and the real-time of the multiple inter-core communication is increased notably; and when the quantity of cores is increased notably, the processing step and procedure do not need to be changed, and the forwarding process that the multi-core message enters the apparatus for the inter-core communication is totally a self-management process of the hardware, therefore, the capability of adapting the notably increased quantity is strong.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limited to any specific form of the combination of the hardware and software.

The above-mentioned embodiments are only used to illustrate the technical scheme of the present invention while not to limit, and the present invention is described in details only referring to the preferable embodiments. Those skilled in the art should understand that they can make the modifications and equivalent replacement according to the technical scheme of the present invention without departing from the spirit and scope of the present invention, which should be embodied in the scope of the appended claims of the present invention.

### Industrial Applicability

The above-mentioned inter-core communication processing apparatus and method can make various cores receive and transmit the messages independently, which solves the problem that accessing the multiple cores at the same time is limited by the bandwidth caused by the design of the shared memory area in the traditional multi-core communication mode, and avoids the operation steps, such as, the mutual exclusion and initialization, etc., brought by the design of the shared memory area in the traditional multi-core communication mode, and improves the inter-core communication efficiency notably. The composition units of the apparatus for the inter-core communication can be expanded, reduced and selected with different design details as required, thus flexibly adapting the notably increasing of the quantity of cores, or the core heterogeneity or the core formed cluster, and the application scene with the special communication requirement. The above-mentioned message format makes the multiple application scenes, such as, the message unicast, multicast and broadcast, etc., to be supported without increasing extra software steps.

## Claims

1. An apparatus for inter-core communication in a multi-core processor, comprising an outbox unit, a relay unit, an inbox unit and an interface unit, wherein:
the outbox unit is configured to: buffer a message that is transmitted from a transmitting core corresponding to the outbox unit and needs to be transmitted to a receiving core, and transmits the buffered message to the relay unit;
the relay unit is configured to: forward the received message to the inbox unit;
the inbox unit is configured to: receive and buffer the message that is transmitted by the relay unit to a receiving core corresponding to the inbox unit, to be read by the receiving core corresponding to the inbox unit; and
the interface unit is configured to: provide interfaces and data protocol adaption between the transmitting core and the apparatus and between the receiving core and the apparatus.

2. The apparatus according to claim 1, wherein the inbox unit comprises:
an interrupt generation module, configured to: when the inbox unit receives the message transmitted to the corresponding receiving core, generate a valid message arrival interrupt request when buffer of the inbox unit is changed from empty to not empty; when a message of the buffer of the inbox unit is read by the receiving core, automatically clear the interrupt request when the buffer is changed from not empty to empty.

3. The apparatus according to claim 1, wherein the outbox unit comprises:
a message buffer, configured to buffer a message wrote by the transmitting core;
a read-write controller, configured to control reading and writing of the message buffer module; and
a state register, configured to store a storage state of the message buffer.

4. The apparatus according to claim 2, wherein the inbox unit further comprises:
a message buffer, configured to buffer a message transmitted by the relay unit;
a read-write controller, configured to control reading and writing of the message buffer module; and
a state register, configured to store a storage state of the message buffer.

5. The apparatus according to claim 1, wherein the message comprises a target identification used for representing a receiving core of the message, and the inbox unit is configured to select the message transmitted to the receiving core corresponding to the inbox unit for buffering according to the target identification in the message.

6. The apparatus according to claim 5, wherein the target identification is made up of A bits, and A is a quantity of receiving cores participating in the inter-core communication, and every bit is corresponding to one receiving core, and a bit corresponding to a target receiving core of the message is valid, and a bit corresponding to a non-target receiving core of the message is invalid.

7. The apparatus according to claim 1, wherein the relay unit comprises an arbiter;
the arbiter is configured to: perform polling and arbitration on messages arriving at the relay unit at the same time, and enable multiple messages arriving at the same time to be serially output in order; or perform priority arbitration on the messages arriving at the relay unit at the same time, and enable multiple messages arriving at the same time to be serially output according to an order with priorities from high to low.

8. A method for inter-core communication in a multi-core processor, comprising:
a transmitting core writing a message required to be transmitted to a receiving core into an outbox unit corresponding to the transmitting core through an interface unit;
the outbox unit transmitting the received message to a relay unit;
the relay unit forwarding the message to an inbox unit through arbitrating;
the inbox unit buffering the message transmitted to a receiving core corresponding to the inbox unit; and
the receiving core reading the message from the inbox unit corresponding to the receiving core.

9. The method according to claim 8, further comprising:
when the inbox unit receives the message transmitted to the corresponding receiving core, generating a valid message arrival interrupt request when buffer of the inbox unit is changed from empty to not empty; when a message of the buffer of the inbox unit is read by the receiving core, automatically clearing the interrupt request when the buffer is changed from not empty to empty.

10. The method according to claim 8, wherein the step of the transmitting core writing a message required to be transmitted to a receiving core into an outbox unit corresponding to the transmitting core comprises:
the transmitting core reading a state indicating register in the outbox unit, and successively writing a message into the outbox unit according to read remaining space information of buffer; or
the transmitting core writing the message into the outbox unit directly.

11. The method according to claim 8, wherein:
the message comprises a target identification representing a receiving core of the message, and the step of the inbox unit buffering the message transmitted to the receiving core corresponding to the inbox unit comprises: the inbox unit selecting the message transmitted to the receiving core corresponding to the inbox unit for buffering according to the target identification in the message.

12. The method according to claim 11, wherein the target identification is made up of A bits, A is an positive integer and is a quantity of receiving cores participating in the inter-core communication, and every bit is corresponding to one receiving core, and a bit corresponding to a target receiving core of the message is valid, and a bit corresponding to a non-target receiving core of the message is invalid.

13. The method according to claim 9, wherein the step of the receiving core reading the message from the inbox unit corresponding to the receiving core comprises:
after the receiving core detects the message arrival interrupt request, reading a state register in the inbox unit to obtain the quantity of messages in the inbox unit, and then reading all messages; or
after the receiving core detects the message arrival interrupt request, reading messages in the inbox unit directly; or
the receiving core reading messages through an inquiry mode directly, the buffer of the inbox unit being empty during performing a reading operation, and the inbox unit returning an invalid indication message to the receiving core.

14. The method according to claim 8, wherein the step of the relay unit forwarding the message to the inbox unit through arbitrating comprises:
the relay unit performing fair polling and arbitration on messages arriving at the same time and enabling multiple messages arriving at the same time to be serially output in order; or performing priority arbitration on messages arriving at the relay unit at the same time and enabling multiple messages arriving at the same time to be serially output according to an order with priorities from high to low.

15. A message for inter-core communication in a multi-core processor, comprising a target identification which represents a target receiving core of the message;
wherein the target identification is made up of A bits, and A is an positive integer and is a quantity of receiving cores in the multi-core processor, and every bit is corresponding to one receiving core, and a bit corresponding to the target receiving core of the message is valid, and a bit corresponding to a non-target receiving core of the message is invalid.

16. The message according to claim 15, further comprising a source identification which represents a source transmitting core of the message; wherein
the source identification is made up of B bits, and B is an positive integer and is a quantity of transmitting cores participating in the inter-core communication, and every bit is corresponding to one transmitting core, and a bit corresponding to the source transmitting core of the message is valid, and a bit corresponding to a non-source transmitting core of the message is invalid; or
the source identification is obtained from performing coding in other ways on a core identification of the transmitting core in the multi-core processor.

17. The message according to claim 15 or 16, further comprising message type information, task information, event information or address information.
